Europäisches Patentamt

European Patent Office

Office européen des brevets

(19)

(11) Veröffentlichungsnummer: **0 194 420**
A1

## (12) EUROPÄISCHE PATENTANMELDUNG

(21) Anmeldenummer: **86100859.7**

(22) Anmeldetag: **23.01.86**

(51) Int. Cl.⁴: **G 11 B 15/665**

(30) Priorität: **14.03.85 DE 3509176**

(43) Veröffentlichungstag der Anmeldung:
**17.09.86 Patentblatt 86/38**

(84) Benannte Vertragsstaaten:
**AT CH DE FR GB LI**

(71) Anmelder: **GRUNDIG E.M.V. Elektro-Mechanische Versuchsanstalt Max Grundig holländ. Stiftung & Co. KG.**
**Kurgartenstrasse 37**
**D-8510 Fürth(DE)**

(72) Erfinder: **Bratenstein, Ernst**
**Taubenweg 26**
**D-8510 Fürth/Bay(DE)**

(72) Erfinder: **Schmidt, Erhard**
**Wickenstrasse 46**
**D-8510 Fürth/Bay(DE)**

(54) Vorrichtung zur Führung eines magnetbandes in einem videorecorder.

(57) Es wird eine Vorrichtung zur Führung eines Magnetbandes über Bandführungsstifte (5,6,7) in einem Videorecorder mit Schrägspuraufzeichnung beschrieben, bei der die Bandführungsstift (5,6,7) über Führungselemente (12), die in eine Führungsbahn eingreifen, das Magnetband teilweise um eine Kopftrommel des Videorecorders während des Bandeinzugsvorganges legen. Die Führungsbahnen für die Führungselemente (12) sind hierbei so ausgelegt, daß die Führungsstifte (5,6,7) das Magnetband in unterschiedlicher Höhenlage und in Abhängigkeit hierzu bei sich veränderndem Raumwinkel um die Kopftrommel führen.

FIG. 2

Croydon Printing Company Ltd.

EP 0 194 420 A1

# VORRICHTUNG ZUR FÜHRUNG EINES MAGNETBANDES IN EINEM VIDEORECORDER

## BESCHREIBUNG

Die Erfindung betrifft eine Vorrichtung zur Führung eines Magnetbandes über Bandführungsstifte in einem Videorecorder, der eine drehbare Kopftrommel mit zugeordneten Magnetköpfen aufweist, und das Magnetband aus einer Bandkassette mit nebeneinander angeordneten Bandspulen herausgezogen in Schrägspurführung die Kopftrommel teilweise umschlingt, wobei die Bandführungsstifte auf Führungselemente aufgesetzt sind.

Es ist eine Vorrichtung an einem Videorecorder zum Herausziehen eines Magnetbandes aus einer Kassette bekannt, bei der Bandführungsstifte, die auf einem Art Gleitstein angeordnet sind, das Magnetband erfassen und von einer Ausgangslage in eine Endlage bringen. Hierbei sind die Gleitsteine mit den Bandführungsstiften mittels eines Führungsteils in einer Ebene bogenförmig bewegbar. Das streifenförmige Führungsteil (z. B. Zahnriemen) ist in einer Ebene flexibel verformbar und wird durch eine Antriebseinrichtung angetrieben. Um das Magnetband in Schräglage wenigstens teilweise um die Kopftrommel zu führen, kann die Kopftrommel selbst in eine Schräglage gebracht werden, oder das Magnetband wird über entsprechend hohe und geneigte Bandführungsstifte von der Kassettenebene schräg über die Kopftrommel in eine höhere Ebene und wieder zurück auf die Ausgangs-Kassettenebene geführt. Eine Kombination aus beiden Möglichkeiten, nämlich die teilweise Schrägstellung der Kopftrommel und eine teilweise unterschiedliche Höhenführung des Magnetbandes findet ebenfalls eine praktische Anwendung. Die Bandführungsstifte werden bei allen bekannten Geräte-Ausführungen in einer Ebene über einen drehbaren, die Kopftrommel umfassenden Steuerring oder in einer Führungskulisse von einer Ausgangsstellung in eine Endstellung bewegt.

Nachteilig ist hierbei, daß sich die Bandführungsstifte während des Bandeinzuges nicht in der Winkellage zum Band befinden, in der sich eine an beiden Bandkanten gleiche Bandspannung einstellt.

Aufgabe der Erfindung ist es daher, eine Vorrichtung für einen Videorecorder mit Schrägspuraufzeichnung zu finden, bei der das Magnetband beim Herausziehen aus der Kassette von der Ausgangsstellung bis zur Endstellung an der Kopftrommel über unterschiedliche Höhenlagen durch Bandführungsstifte so geführt wird, daß die Randspannung auf beiden Bandaußenkanten und deren Anlage an den Bandführungsstiften immer gleich ist, wobei die Bandführungsstifte das Band beidseitig umfassen und eine einfache kostengünstige Führung der Bandführungsstifte möglich ist.

Diese Aufgabe wird erfindungsgemäß durch die im Kennzeichen des Patentanspruchs 1 angegebenen Merkmale gelöst.

Die Erfindung wird nachfolgend anhand der Zeichnungen näher erläutert.

Fig. 1    ist eine schematische Darstellung einer Magnetbandkassette mit Kopftrommel und zugeordneten Bandführungsstiften eines Videorecorders als Draufsicht,

Fig. 2    ist eine schematische Darstellung der Kopftrommel mit Bandführungsstiften nach Fig. 1 in einer Seitenansicht, und

Fig. 3 u. 4    ist eine schematische Darstellung von verschiedenen Ausführungsbeispielen zur Aufnahme
eines Führungselementes in
einer zugeordneten Führungsbahn
eines Gerätechassis.

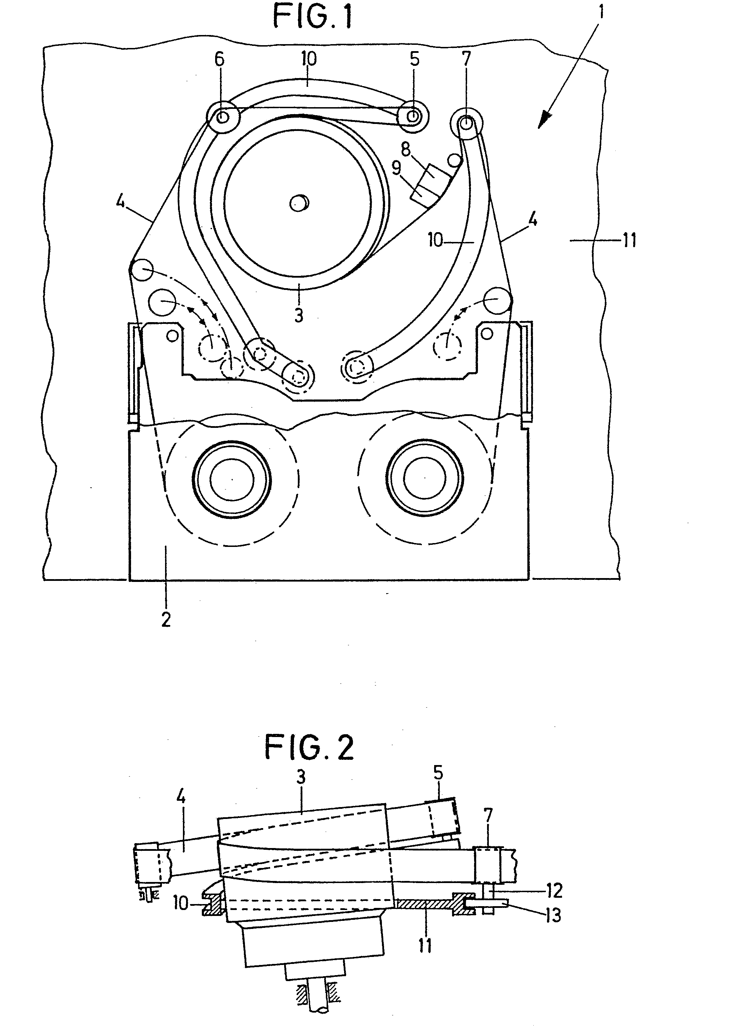

Die Figur 1 zeigt in schematischer Darstellung die
wesentlichsten Teile eines Videorecorders 1, bestehend aus einer Magnetbandkassette 2, einer Kopftrommel 3, einem aus der Kassette herausgezogenen
Magnetband 4, wobei in der dargestellten Zeichnung
das Magnetband die Kopftrommel nur teilweise umschlingt. Zur Führung des Magnetbandes dienen Bandführungsstifte 5, 6, 7. Die Kopftrommel ist gegenüber
der Kassette leicht geneigt angeordnet. In der Kopftrommel befinden sich bekannterweise die Videoköpfe
und außerhalb der Trommel im Bandlaufbereich sind
die Audioköpfe 8, 9 angeordnet. In der vorliegenden
Zeichnung ist das Magnetband 4 bereits aus der Kassette 2 herausgezogen und in schräger Führung teilweise um die Kopftrommel geführt sowie an die Audioköpfe und an die Antriebswelle anliegend dargestellt.
Die Bandführungsstifte bewegen sich hierzu über
Führungsbahnen 10 und sind durch Triebmittel angetrieben, um von einer Ausgangsstellung in eine Endstellung bewegt zu werden. Die Führungsbahnen 10
sind im Gerätechassis 11 integriert und die Bandzu finden, bei der das Magnetband beim Herausziehen aus der Kassette von der Ausgangsstellung bis zur Endstellung an der Kopftrommel über unterschiedliche Höhenlagen durch Bandführungsstifte so geführt wird, daß die Randspannung auf beiden Bandaußenkanten und deren Anlage an den Bandführungsstiften immer gleich ist, wobei die Bandführungsstifte das Band beidseitig umfassen und eine einfache kostengünstige Führung der Bandführungsstifte möglich ist.

Diese Aufgabe wird erfindungsgemäß durch die im Kennzeichen des Patentanspruchs 1 angegebenen Merkmale gelöst.

Die Erfindung wird nachfolgend anhand der Zeichnungen näher erläutert.

Fig. 1    ist eine schematische Darstellung einer Magnetbandkassette mit Kopftrommel und zugeordneten Bandführungsstiften eines Videorecorders als Draufsicht,

Fig. 2    ist eine schematische Darstellung der Kopftrommel mit Bandführungsstiften nach Fig. 1 in einer Seitenansicht, und

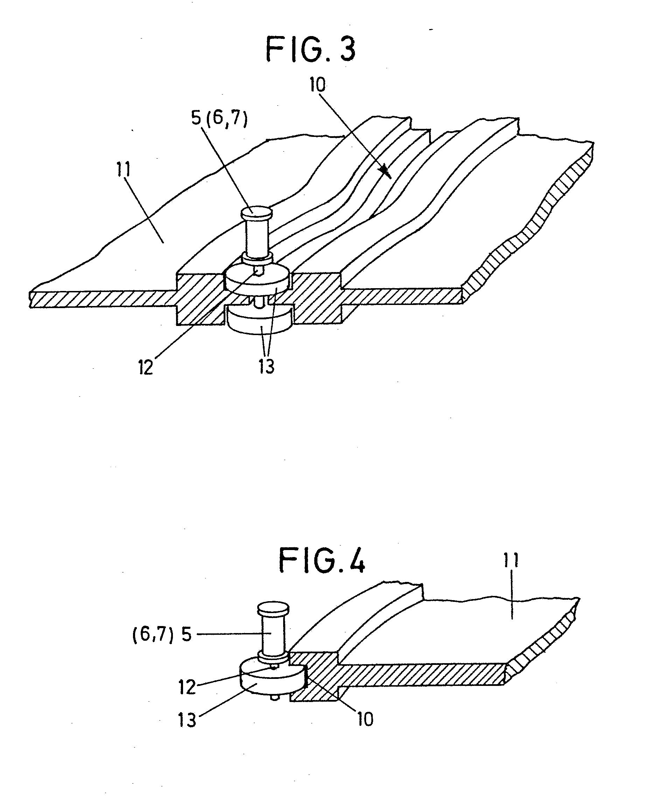

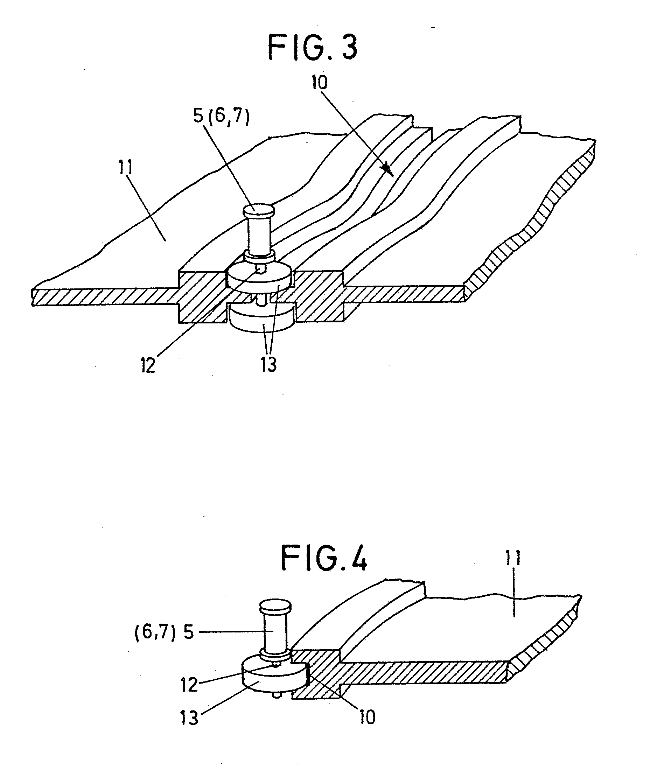

Fig. 3 u. 4    ist eine schematische Darstellung von verschiedenen Ausführungsbeispielen zur Aufnahme
eines Führungselementes in
einer zugeordneten Führungsbahn
eines Gerätechassis.

Die Figur 1 zeigt in schematischer Darstellung die
wesentlichsten Teile eines Videorecorders 1, bestehend aus einer Magnetbandkassette 2, einer Kopftrommel 3, einem aus der Kassette herausgezogenen
Magnetband 4, wobei in der dargestellten Zeichnung
das Magnetband die Kopftrommel nur teilweise umschlingt. Zur Führung des Magnetbandes dienen Bandführungsstifte 5, 6, 7. Die Kopftrommel ist gegenüber
der Kassette leicht geneigt angeordnet. In der Kopftrommel befinden sich bekannterweise die Videoköpfe
und außerhalb der Trommel im Bandlaufbereich sind
die Audioköpfe 8, 9 angeordnet. In der vorliegenden
Zeichnung ist das Magnetband 4 bereits aus der Kassette 2 herausgezogen und in schräger Führung teilweise um die Kopftrommel geführt sowie an die Audioköpfe und an die Antriebswelle anliegend dargestellt.
Die Bandführungsstifte bewegen sich hierzu über
Führungsbahnen 10 und sind durch Triebmittel angetrieben, um von einer Ausgangsstellung in eine Endstellung bewegt zu werden. Die Führungsbahnen 10
sind im Gerätechassis 11 integriert und die Bandführungsstifte 5,6,7 bewegen sich in unterschiedlicher Höhenlage und unterschiedlicher Linienführung
im Geräteinneren. Weiterhin sind die Führungsbahnen
so ausgebildet, daß sich die räumliche Winkelstellung der Bandführungsstifte zur Kopftrommel während
des Bewegungsvorganges verändert. Hierdurch wird
erreicht, daß die Randspannungen des Magnetbandes
auf beiden Bandkantenseiten auch während des Bandeinzugvorganges gleich groß sind. Ein Verwellen des
Magnetbandes wird hierdurch vermieden und die Minderung der Aufzeichnungs- und Wiedergabequalität des
Gerätes durch Bandveränderung wird ausgeschaltet.

In der Figur 2 ist die unterschiedliche Höhen- und
Winkellage der Bandführungsstifte 5,6,7 in der Endlage nach dem Herausziehen des Bandes aus der Kassette zu erkennen. In der Ausgangsstellung befinden
sich alle Bandführungsstifte auf gleicher Ebene und
Höhe mit der Kassette und erfassen das Magnetband
innerhalb der Kassette.

Die Figur 3 zeigt einen Teil des Gerätechassis 11
mit einer Führungsbahn 10 für die Bandführungsstifte
5,6 oder 7. Die Bandführungsstifte 5,6,7 sind auf
Führungselemente 12 aufgesetzt, die formschlüssig in
die Führungsbahn 10 eingreifen. Zur Beförderung der
Führungselemente von der Ausgangsstellung zu der
Endstellung der Bandführungsstifte dienen bekannte Triebmittel, z. B. Zugseile oder Zugketten bzw. Zahnriemen, auch ist eine direkte Verschiebung der Führungselemente über Schlepphebel, die in einer Ebene
angeordnet sind, möglich. Das Führungselement 12
kann über zwei Rollen 13, die über eine zungenförmige
aus der Führungsbahn herausragende Schiene greifen,
geführt sein, oder es ist nur eine Rolle vorgesehen,
die in eine Nut der Führungsbahn eingreift (siehe
Fig. 4). Die Führungsstifte 5,6,7 können beidseitig
Flansche aufweisen, da das Magnetband nicht gezwungen
ist, sich höhenmäßig auf den Bandführungsstiften
während des Band-Einfädelvorganges zu verschieben.

*1*

VORRICHTUNG ZUR FÜHRUNG EINES MAGNETBANDES
IN EINEM VIDEORECORDER

PATENTANSPRÜCHE

1. Vorrichtung zur Führung eines Magnetbandes
über Bandführungsstifte in einem Videorecorder, der
eine drehbare Kopftrommel mit zugeordneten Magnetköpfen aufweist, und das Magnetband aus einer Bandkassette mit nebeneinander angeordneten Bandspulen
herausgezogen in Schrägspurführung die Kopftrommel
teilweise umschlingt, wobei die Bandführungsstifte
auf Führungselemente aufgesetzt sind,
d a d u r c h   g e k e n n z e i c h n e t ,   daß
die Führungselemente (12) formschlüssig in Führungsbahnen (10) des Gerätechassis (11) eingreifen, daß
die Führungsbahnen in unterschiedlichen Höhenlagen
und unterschiedlichen Linienführungen im Gerät verlaufen und hierbei die Kopftrommel einseitig oder
beidseitig teilweise umgreifen, daß sich der Raumwinkel der Führungselemente (12) und somit der

2

Bandführungsstifte (5,6,7) gegenüber der Achslage der Kopftrommel und der Bandkassettenspulen in Abhängigkeit zur jeweiligen Höhenlage der Führungsbahn ändert, und daß die Führungselemente durch Triebmittel in eine Ausgangsstellung und eine Endstellung bewegbar sind.

2. Vorrichtung nach Anspruch 1, d a d u r c h g e k e n n z e i c h n e t , daß die Führungsbahnen (10) nut- oder zungenförmig ausgebildet sind.

3. Vorrichtung nach Anspruch 1 oder 2, d a - d u r c h g e k e n n z e i c h n e t , daß die Führungselemente Rollen (13) aufweisen, die in die Führungsbahnen des Gerätechassis eingreifen.

4. Vorrichtung nach einem der bisherigen Ansprüche, d a d u r c h g e k e n n z e i c h - n e t , daß die Rollen und Führungsbahnen verzahnt sind.

5. Vorrichtung nach einem der bisherigen Ansprüche, d a d u r c h g e k e n n z e i c h - n e t , daß die Führungselemente in den Führungsbahnen über höhengeführte Zugseile oder Ketten bewegbar sind.

6. Vorrichtung nach einem der bisherigen Ansprüche, d a d u r c h   g e k e n n z e i c h -
n e t ,   daß die Führungselemente in den Führungsbahnen durch in einer Ebene angeordnete Schlepphebel steuerbar sind.

## FIG.1

## FIG.2

# FIG. 3

10

5 (6,7)

11

12

13

# FIG.4

11

(6,7) 5

12

13

10

FIG. 3

FIG.4

Europäisches
Patentamt

# EUROPÄISCHER RECHERCHENBERICHT

## EINSCHLÄGIGE DOKUMENTE

EP 86100859.7

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | US - A - 4 322 761 (BEITLER)  * Fig. 1-6; Zusammenfassung * | 1,2,6 | G 11 B 15/665 |
| A | EP - A1 - 0 024 361 (PHILIPS)  * Fig. 1,2; Ansprüche 1-14 * | 1,2,5 | |
| A | US - A - 4 264 937 (KABACINSKI)  * Fig. 1,2; Zusammenfassung * | 1,3,4, 6 | |
| A | US - A - 3 984 870 (INOUE)  * Fig. 2; Zusammenfassung * | 1 | |
| A | DE - A1 - 3 213 599 (SONY)  * Fig. 1; Zusammenfassung *  ---- | 1 | |

| RECHERCHIERTE SACHGEBIETE (Int. Cl 4) |
|---|
| G 11 B 15/00  H 04 N 5/00 |

Der vorliegende Recherchenbericht wurde für alle Patentansprüche erstellt.

| Recherchenort | Abschlußdatum der Recherche | Prüfer |
|---|---|---|
| WIEN | 13-06-1986 | BERGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82